# EUROPÄISCHE PATENTANMELDUNG

(11) **EP 2 851 146 A1**
(43) Veröffentlichungstag der Anmeldung: **25.03.2015**
(21) Anmeldenummer: 13185749.2
(22) Anmeldetag: 24.09.2013
(51) Int. Cl.: B22F 3/105, B22F 5/10, F01D 5/14

(54) **Verfahren zur Herstellung einer Turbinenschaufel und zugehörige Turbinenschaufel**

(71) Anmelder: Siemens Aktiengesellschaft, 80333 München (DE)
(72) Erfinder: Walkenhorst, Jan, Dr., 45478 Mülheim an der Ruhr (DE); de Lazzer, Armin, Dr., 45479 Mülheim an der Ruhr (DE)

(57) **Zusammenfassung**

Die Erfindung betrifft ein Verfahren zur Herstellung einer Turbinenschaufel (1), wobei mittels des Selective Laser Meltings der Turbinenschaufelfuß (1) derart ausgebildet wird, dass ein Hohlraum (6) im Turbinenschaufelfuß (1) entsteht, wobei dieser Hohlraum (6) durch eine Anzahl an Querstreben (11) zu einer erhöhten Festigkeit führt. Entsprechende Turbinenschaufel wird ebenfalls präsentiert.

## Beschreibung

Die Erfindung betrifft ein Verfahren zum Herstellen einer Komponente für eine Strömungsmaschine, wobei ein Werkstoff in Pulverform angeordnet und mittels einer Energiestrahlung lokal umgeschmolzen wird und nach Erstarrung eine feste Materialschicht bildet, wobei eine weitere Schicht des Werkstoffs in Pulverform auf die feste Materialschicht aufgebracht und mittels der Energiestrahlung lokal umgeschmolzen wird und nach Erstarrung eine weitere feste Materialschicht bildet.

Des Weiteren betrifft die Erfindung eine Turbinenschaufel.

Turbinenschaufeln als Ausführungsform einer Komponente für eine Strömungsmaschine werden beispielsweise in Dampfturbinen eingesetzt. Die Turbinenschaufeln sind in einer Längsrichtung ausgebildet und weisen ein profiliertes Schaufelblatt und einen am Schaufelblatt materialeinheitlich ausgebildeten Schaufelfuß auf. Der Schaufelfuß muss durch eine geeignete geometrische Form in dem Rotor verankert werden. Speziell bei Turbinenschaufeln, die auf Rotoren befestigt sind, muss diese Verankerung die im Betrieb auftretende Fliehkraft der Turbinenschaufel tragen. Es sind Bauformen von Schaufelfüßen bekannt, die erheblich zur Gesamtmasse der Turbinenschaufel beitragen und damit die Tragfähigkeit des Rotors ausnutzen, ohne der aerodynamischen Aufgabe im Betrieb zu Gute zu kommen.

Die Turbinenschaufeln werden üblicherweise aus einem Stabmaterial aus dem Vollen gefräst. Bei gegebenem Turbinenschaufelfußquerschnitt ergibt sich eine feste Relation zwischen den Flieh- und Strömungskräften. Die Turbinenschaufelfußgröße und geometrische Form ist in der Regel durch die Tragfähigkeit der Welle eingeschränkt. Abhilfe schafft hier ein Wechsel zu sehr hochwertigen Schaufelmaterialien. Solche hochwertigen Materialien sind allerdings vergleichsweise teuer.

Abhilfe könnte hier schaffen, die Turbinenschaufeln mit geschlossenen Hohlquerschnitten auszuführen. Hierbei ist das Wachs-Ausschmelzverfahren, was als ein Gießverfahren bezeichnet werden kann, ein bekanntes Verfahren, was allerdings prozesstechnisch sehr teuer ist, eine individuelle Gussform für jede zu fertigende Geometrie erfordert, lediglich auf gießbare Materialien beschränkt ist und keine komplexen porösen Innenstrukturen möglich sind.

Die Erfindung will hier Abhilfe schaffen.

Aufgabe der Erfindung ist es, ein einfaches Verfahren zur Herstellung einer Komponente für eine Strömungsmaschine anzugeben.

Gelöst wird diese Aufgabe durch ein Verfahren zum Herstellen einer Komponente für eine Strömungsmaschine, wobei ein Werkstoff in Pulverform angeordnet und mittels einer Energiestrahlung lokal umgeschmolzen wird und nach Erstarrung eine feste Materialschicht bildet, wobei eine weitere Schicht des Werkstoffs in Pulverform auf die feste Materialschicht aufgebracht und mittels der Energiestrahlung lokal umgeschmolzen wird und nach Erstarrung eine weitere fest Materialschicht bildet, wobei der Werkstoff derart angeordnet wird, dass ein Hohlraum entsteht.

Somit wird erfindungsgemäß vorgeschlagen, die Komponente für eine Strömungsmaschine als Hohlstruktur mit der Methode des Selective Laser Meltingverfahren auszuführen. Das Selective Laser Meltingverfahren wird umgangssprachlich auch als 3D-Drucken von Metallen bezeichnet.

Hohlquerschnitte weisen eine sehr geringe Masse auf im Vergleich zu einem Vollquerschnitt, wobei die Steifigkeit des Hohlquerschnitts groß ist. Sofern die Komponente als Turbinenschaufel für eine Strömungsmaschine ausgebildet ist, können die in der Fliehkraft dominierenden Teile einer Strömungsmaschine durch größere Schaufeln auf ein- und denselben Turbinenschaufelfußquerschnitt realisiert werden. Dies würde zu einer deutlichen Kostenreduzierung und einer höheren Effizienz der Strömungsmaschine führen.

Für das erfindungsgemäße Verfahren sind im Vergleich zum Wachs-Ausschmelzverfahren keine Modelle erforderlich, es können nicht gießbare Materialien verarbeitet werden und der Aufbau von komplexen porösen Innenstrukturen ist möglich. Insgesamt könnte durch das erfindungsgemäße Verfahren eine Massenverringerung um bis zu 50% erreicht werden.

Vorteilhafte Weiterbildungen sind in den Unteransprüchen angegeben.

So weist die Turbinenschaufel einen Turbinenschaufelfuß auf, wobei der Turbinenschaufelfuß durch eine Wand der Dicke S ausgebildet ist.

In einer weiteren vorteilhaften Weiterbildung wird der Hohlraum mit Querstreben ausgeführt, die die Wände im Turbinenschaufelfuß miteinander materialeinheitlich verbinden. Dadurch erhöht sich die Steifigkeit und Festigkeit des Turbinenschaufelfußes.

In einer vorteilhaften Weiterbildung sind zumindest zwei Querstreben ausgebildet, die materialeinheitlich miteinander verbunden sind.

Vorteilhafterweise sind die Querstreben im Wesentlichen um 45° gegenüber der Längsrichtung angeordnet. Solch eine Ausführungsform erhöht die Festigkeit des Turbinenschaufelfußes wesentlich.

Die Wand kann der geometrischen Form des Schaufelfußes folgen, so dass die Wand eine einheitliche Dicke S aufweist. Allerdings ist es auch vorteilhafterweise möglich, die Dicke der Wand derart anzupassen, dass an den Stellen, an denen eine höhere Festigkeit gewünscht ist, die Wanddicke entsprechend angepasst ist und ggf. größer ist.

Die im Hohlraum ausgeführten Querstreben sind derart angeordnet, dass die Festigkeit des Schaufelfußes insgesamt erhöht ist.

Dazu können die Querstreben in einer regelmäßigen Anordnung ausgebildet sein. Denkbar ist es, dass im Hohlraum die Querstreben an den Stellen, an denen eine erhöhte Festigkeit erforderlich ist, angeordnet werden.

Die Erfindung wird anhand eines Ausführungsbeispiels näher erläutert. Die Figuren zeigen ein Ausführungsbeispiel der Erfindung in schematischer Weise.

Es zeigen:
- Figur 1 - 4: Darstellung eines Turbinenschaufelfußes,
- Figur 5 - 8: schematische Darstellung eines Schaufelfußes in alternativer Bauweise,
- Figur 9 - 12: schematische Darstellung der erfindungsgemäßen Schaufelfüße,
- Figur 13 - 16: schematische Darstellung eines erfindungsgemäßen Schaufelfußes in alternativer Ausführungsform,
- Figur 17 - 20: schematische Darstellung eines erfindungsgemäßen Schaufelfußes,
- Figur 21 - 24: schematische Darstellung eines erfindungs-gemäßen Schaufelfußes in alternativer Ausführungsform.

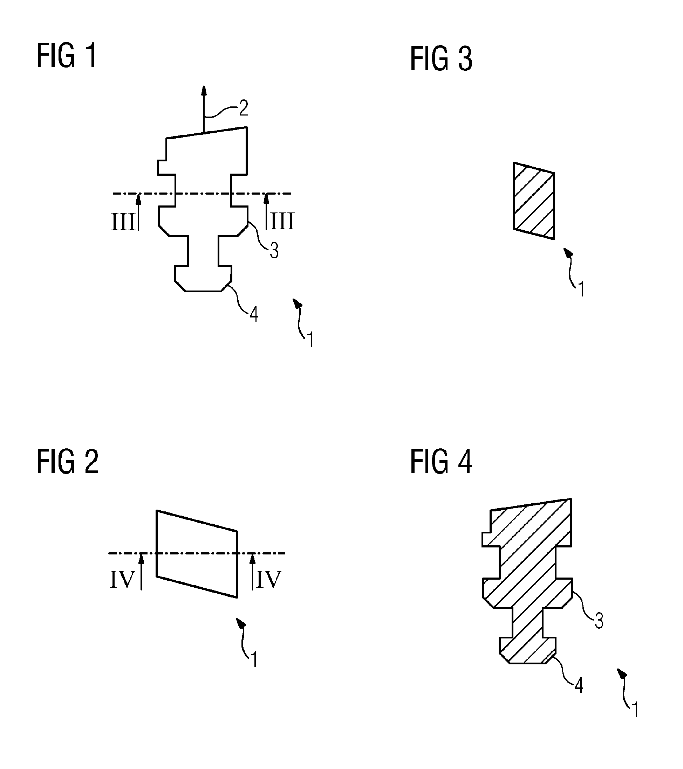

Die Figur 1 zeigt einen Turbinenschaufelfuß 1 in einer Doppelhammerbauweise. Der Turbinenschaufelfuß 1 ist in einer Längsrichtung 2 ausgebildet, wobei das am Turbinenschaufelfuß 1 angeordnete Turbinenschaufelblatt nicht näher dargestellt ist. Der Turbinenschaufelfuß 1 ist eine Ausführungsform einer Komponente für eine Strömungsmaschine, wie beispielsweise einer Dampfturbine. Die geometrische Form des Turbinenschaufelfußes 1 wird als Doppelhammer bezeichnet und ist gekennzeichnet durch einen ersten Abstützvorsprung 3 und einem zweiten in Längsrichtung 2 ausgebildeten Abstützvorsprung 4. Die geometrische Form des Turbinenschaufelfußes 1 wird in eine entsprechend gestaltete Nut, die als komplementäre Form zum Turbinenschaufelfuß 1 ausgebildet ist, eingepasst. Im Betrieb wirkt eine Fliehkraft in Längsrichtung 2.

Die Figur 2 zeigt eine Draufsicht von unten auf den Turbinenschaufelfuß 1. Die geometrische Form dieser Draufsicht des Turbinenschaufelfußes 1 entspricht einem Parallelogramm.

Die Figur 3 zeigt eine Darstellung entlang einem Schnitt III-III aus Figur 1. Die Figur 1 zeigt eine Seitenansicht des Turbinenschaufelfußes 1. Wie in Figur 3 zu sehen, ist die Schnittdarstellung gemäß Figur 3 derart, dass die geometrische Form einem Parallelogramm entspricht.

Die Figur 4 zeigt einen Schnitt IV-IV gemäß der Draufsicht aus Figur 2.

Die geometrische Form der Schnittdarstellung gemäß Figur 4 ähnelt der geometrischen Form der Seitenansicht aus Figur 1.

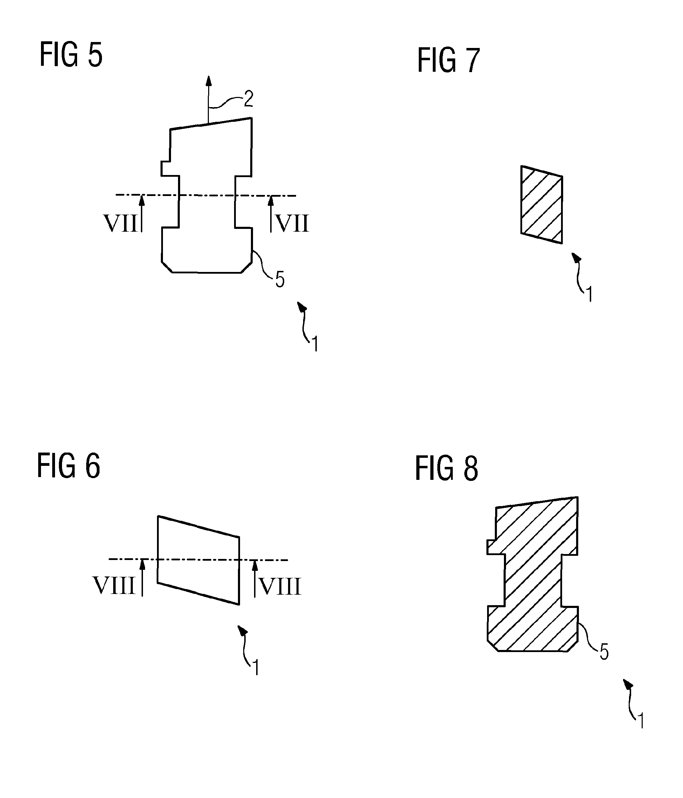

Die Figuren 5 - 8 zeigen entsprechende Darstellungen eines Turbinenschaufelfußes 1 in einer alternativen Ausführungsform, nämlich einem Hammerfuß mit einfacher Ausführung. Das bedeutet, dass der Turbinenschaufelfuß 1 lediglich einen Abstützvorsprung 5 aufweist.

Die Figuren 1 - 8 zeigen den Stand der Technik.

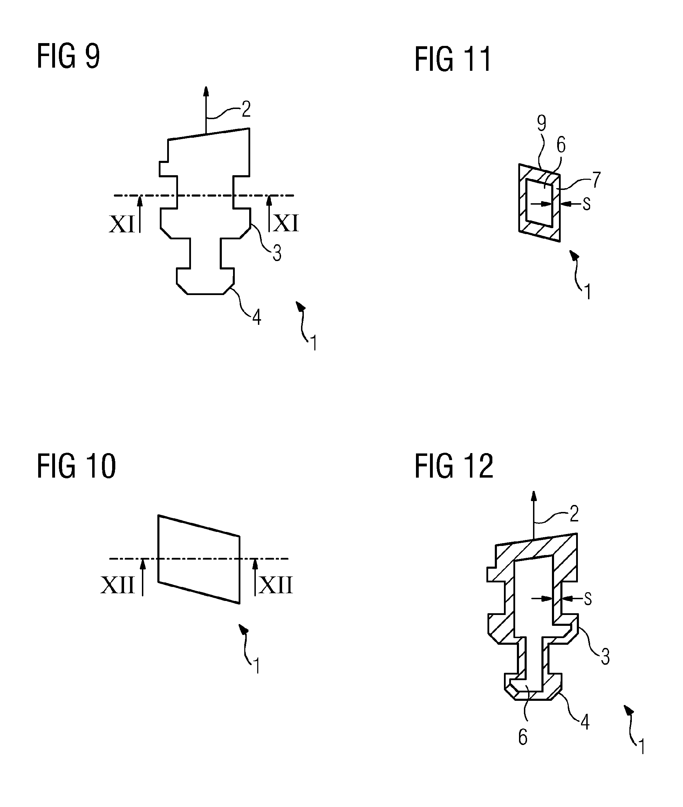

Die Figuren 9 - 12 zeigen eine erfindungsgemäße Ausführungsform der Turbinenschaufel gemäß der Figur 1 - 4.

Die Figur 9 zeigt eine Seitenansicht der erfindungsgemäßen Turbinenschaufel.

Die Figur 10 zeigt eine Draufsicht der erfindungsgemäßen Turbinenschaufel.

Die Figur 11 zeigt einen Schnitt XI-XI gemäß der Figur 9. Zu sehen ist, dass die geometrische Form der Schnittdarstellung gemäß Figur 11 einem Parallelogramm entspricht und ein Hohlraum 6 im Turbinenschaufelfuß 1 durch das Selective Laser Melting entstanden ist. Dabei wird ein Werkstoff in Pulverform angeordnet und mittels einer Energiestrahlung lokal umgeschmolzen und nach einer Erstarrung eine feste Materialschicht gebildet. Eine weitere Schicht des Werkstoffs wird in Pulverform auf die feste Materialschicht aufgebracht und mittels der Energiestrahlung lokal umgeschmolzen und nach Erstarrung eine weitere feste Materialschicht gebildet. Der Werkstoff wird dann derart angeordnet, dass ein Hohlraum 6 entsteht.

Der Hohlraum 6 ist hierbei derart ausgeführt, dass die erste Wand 7 eine Dicke S aufweist. Die zweite Wand 9 kann die gleiche Dicke S wie die erste Wand 7 aufweisen oder eine unterschiedliche Dicke aufweisen.

Die Figur 12 zeigt einen Schnitt XII-XII aus Figur 10. In konsequenter Fortführung zu Figur 11 ist in der Schnittdarstellung 12 ebenso der Hohlraum 6 zu erkennen. Der Hohlraum 6 wird dabei derart ausgeführt, dass nahezu eine beliebige geometrische Form möglich ist. In der in Figur 12 dargestellten Ausführungsform ist die linke Seite des Abstützvorsprungs 3 nicht mit einem Hohlraum ausgeführt. Der zweite Abschnittsvorsprung 4 ist hingegen lediglich in der linken Seite mit einem Hohlraum 6 ausgeführt. In alternativen Ausführungsformen kann der gesamte Doppelhammerfuß mit einer konstanten Dicke S ausgeführt werden.

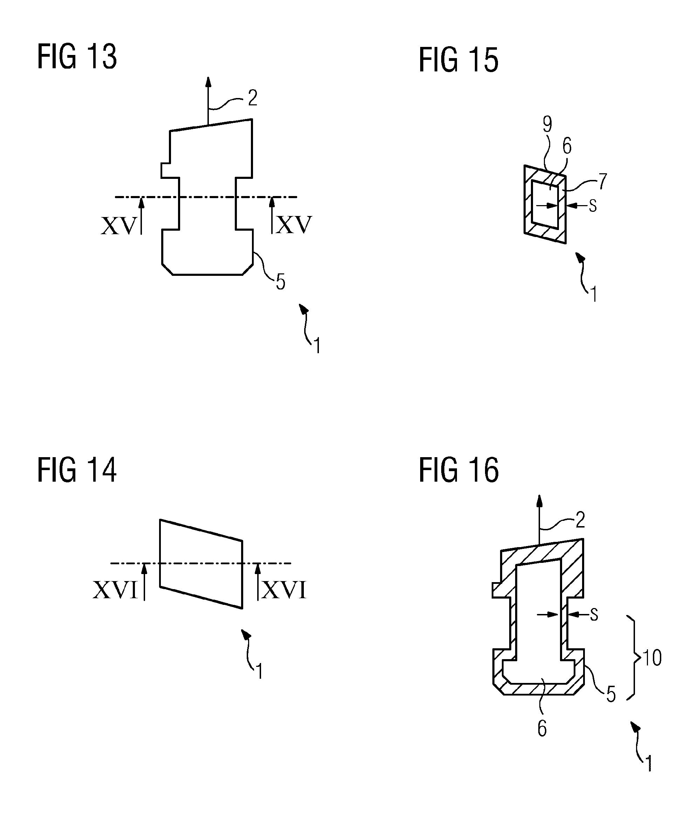

Die Figuren 13 - 16 zeigen eine erfindungsgemäße Ausführungsform des einfachen Hammerfußes der Figuren 5 - 8.

Figur 13 zeigt eine Seitenansicht einer erfindungsgemäßen Turbinenschaufel.

Figur 14 zeigt eine Draufsicht der erfindungsgemäßen Turbinenschaufel.

Die Figuren 15 und 16 zeigen einen Schnitt XV-XV gemäß der Figur 13 und entsprechend einen Schnitt XXI-XXI der Figur 14. Wie in Figur 15 zu sehen, ist wiederum ein Hohlraum 6 durch das Selective Laser Melting-Verfahren entstanden. Die Dicke S der ersten Wand 7 bzw. der zweiten Wand 9 kann einheitlich, also gleich ausgeführt sein. Die Wanddicke der ersten Wand 7 als auch der zweiten Wand 9 kann aber auch unterschiedlich ausgeführt sein, je nachdem welche Belastungen im Turbinenschaufelfuß 1 herrschen.

Die Figur 16 zeigt, dass die Wanddicke S des Turbinenschaufelfußes 1 im unteren Bereich 10 des Turbinenschaufelfußes 1 nahezu konstant ist.

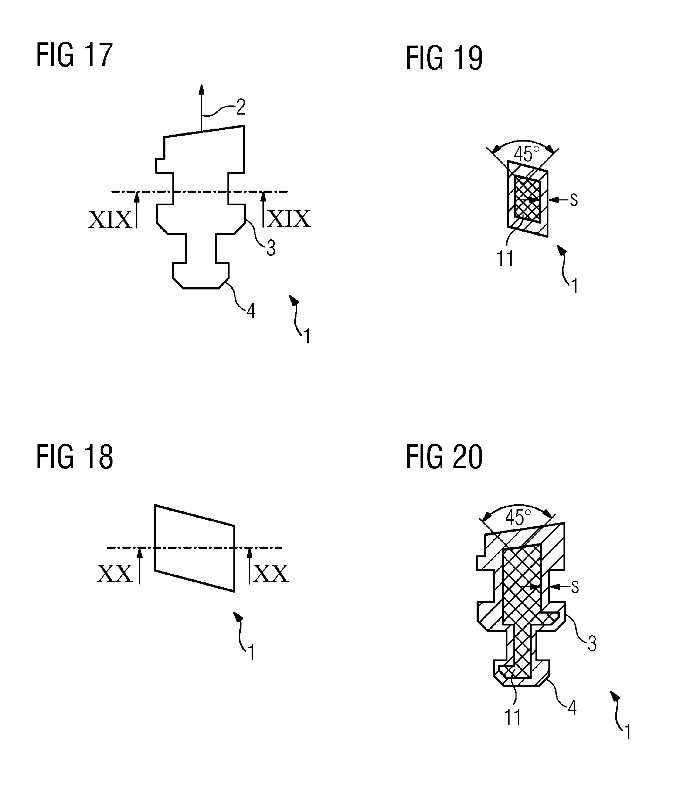

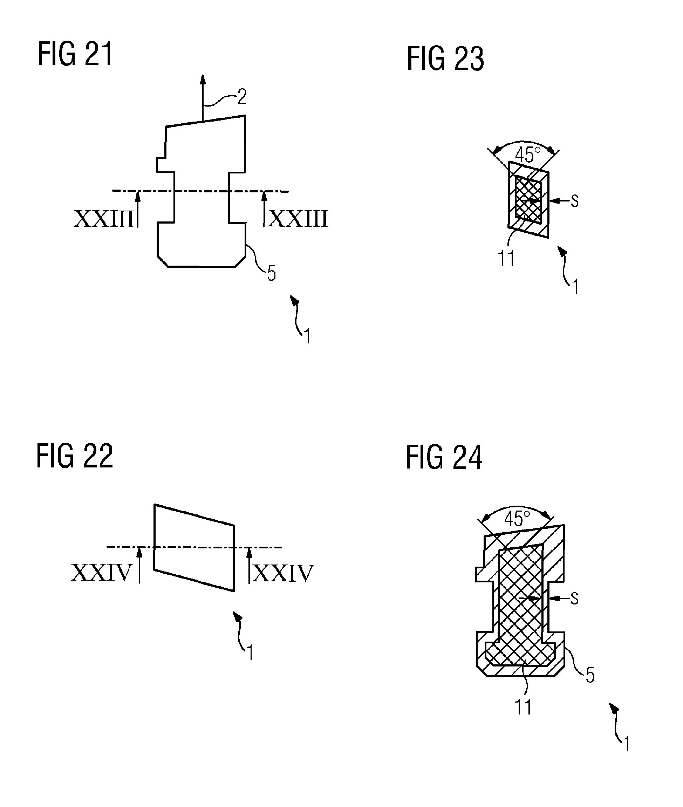

Die Figuren 17 - 20 zeigen eine Weiterbildung der Erfindung, die darin besteht, dass der Hohlraum 6 nunmehr mit einzelnen Querstreben 11 ausgebildet ist. Die Querstreben 11 bilden ein geometrisches Netz innerhalb des Hohlraums 6 und sind im Wesentlichen um 45° gegenüber der Längsrichtung 2 geneigt. Die Querstreben 11 (es sind lediglich zwei Querstreben jeweils in den Figuren 19, 20 sowie 23, 24 mit dem Bezugszeichen 11 gekennzeichnet) werden ebenso durch das Selective Laser Melting hergestellt und werden genau an den Stellen angeordnet, an denen eine erhöhte Festigkeit gewünscht ist. Die Querstreben 11 werden hierbei derart angeordnet, dass sie sich materialeinheitlich berühren und somit ein festes Netz innerhalb des Hohlraums 6 bilden. Mit anderen Worten: der Hohlraum ist mehr oder weniger porös ausgeführt. Die netzartige Struktur führt zu einer erhöhten Festigkeit des Turbinenschaufelfußes 1.

## Patentansprüche

1. Verfahren zum Herstellen einer Komponente für eine Strömungsmaschine,
wobei ein Werkstoff in Pulverform angeordnet und mittels einer Energiestrahlung lokal umgeschmolzen wird und nach Erstarrung eine feste Materialschicht bildet,
wobei eine weitere Schicht des Werkstoffs in Pulverform auf die feste Materialschicht aufgebracht und mittels der Energiestrahlung lokal umgeschmolzen wird und nach Erstarrung eine weitere fest Materialschicht bildet,
**dadurch gekennzeichnet, dass**
der Werkstoff derart angeordnet wird, dass ein Hohlraum (6) entsteht.

2. Verfahren nach Anspruch 1,
wobei die Komponente als eine Turbinenschaufel ausgebildet wird.

3. Verfahren nach Anspruch 2,
wobei die Turbinenschaufel einen Turbinenschaufelfuß (1) umfasst und der Hohlraum (6) im Turbinenschaufelfuß (1) angeordnet wird.

4. Verfahren nach einem der vorhergehenden Ansprüche, wobei der Hohlraum (6) derart angeordnet wird, dass eine Dicke S der Wand im Turbinenschaufelfuß (1) konstant ist.

5. Verfahren nach einem der vorhergehenden Ansprüche, wobei der Werkstoff derart angeordnet wird, dass im Hohlraum (6) eine feste Materialschicht ausgebildet wird, die zu einem porösen Hohlraum führt.

6. Verfahren nach Anspruch 5,
wobei im Hohlraum (6) Querstreben (11) zur Vergrößerung der Festigkeit ausgebildet werden.

7. Verfahren nach Anspruch 6,
wobei der Turbinenschaufelfuß (1) mit einer zur Längsrichtung (2) ausgerichteten ersten Wand (7) und einer zweiten Wand (9) ausgebildet wird,
wobei eine Querstrebe (11) zwischen der ersten Wand (7) und der zweiten Wand (9) ausgebildet wird.

8. Verfahren nach Anspruch 7,
wobei zwei Querstreben (11) jeweils die erste Wand (7) mit der zweiten Wand (9) verbinden und materialeinheitlich miteinander verbunden sind.

9. Verfahren nach einem der Ansprüche 5 bis 8,
wobei die Querstreben (11) im Wesentlichen um 45° gegenüber der Längsrichtung (2) angeordnet werden.

10. Turbinenschaufel
umfassend ein in Längsrichtung ausgebildetes Schaufelblatt und einen Turbinenschaufelfuß (1),
hergestellt nach einem Verfahren gemäß der Ansprüche 1 bis 9.
